# DEMANDE DE BREVET EUROPEEN

(11) **EP 2 292 967 A2**
(43) Date de publication de la demande: **09.03.2011**
(21) Numéro de dépôt: 10305925.9
(22) Date de dépôt: 30.08.2010
(51) Int. Cl.: F16L 55/033, G10K 11/172, F01N 1/12

(54) **Dispositif d'atténuation acoustique**

(30) Priorité: 31.08.2009 FR 0955938
(71) Demandeur: Ae2s, 69960 Corbas (FR)
(72) Inventeur: Bastion, Bernard, 01150, BLYES (FR); Manet, Vincent, 69005, LYON (FR); Benarrous, Edmond, 69210, LENTILLY (FR)
(74) Mandataire: Palix, Stéphane

(57) **Abrégé**

Dispositif d'atténuation acoustique (1) destiné à équiper une canalisation parcourue par un flux gazeux, incluant un organe (3) de forme sensiblement hélicoïde dont l'axe est sensiblement parallèle à l'axe de la canalisation, **caractérisé en ce qu**'il comporte :
- une plaque (2) apte à être enroulée de sorte à avoir deux bords jointifs (23,24) pour couvrir la surface interne ou former une section de ladite canalisation, ladite plaque (2) comportant au moins deux rainures (25,26) sensiblement parallèles, inclinées d'un angle non nul par rapport à l'axe de la canalisation ;
- une bande déformable (3) dont les lisières (31,32) sont agencées pour coulisser à l'intérieur desdites rainures (25,26), et former l'organe de forme hélicoïde ;

ladite plaque (2) et/ou ladite bande (3) étant réalisées en un matériau présentant des propriétés d'absorption acoustique.

## Description

### DOMAINE DE L'INVENTION

L'invention se rattache au domaine des dispositifs d'atténuation acoustique, et plus particulièrement des dispositifs destinés à équiper les appareils ou les installations qui génèrent ou véhiculent un flux d'air ou plus généralement un flux gazeux par lequel se propagent des ondes acoustiques. Elle vise plus particulièrement un dispositif d'atténuation acoustique qui permet de limiter la propagation de ces ondes acoustiques, et donc de limiter les nuisances sonores au voisinage, et ce tout en ne s'opposant que très faiblement à la circulation du flux gazeux.

### TECHNIQUES ANTERIEURES

On connaît de multiples appareils et installations dans lesquels un flux gazeux est généré. Il peut s'agir d'installations dont l'objet principal est la génération de ce flux gazeux, par exemple dans les systèmes aérauliques de ventilation ou de climatisation. Ce flux gazeux peut également être nécessaire pour assurer le refroidissement d'un appareil dont un organe principal produit de la chaleur, tel qu'un compresseur ou plus généralement un moteur thermique.

Ainsi, la canalisation qui véhicule le flux d'air est en relation directe avec un ventilateur ou d'autres organes qui génèrent des ondes acoustiques. Ces ondes sonores peuvent constituer une gêne et de nombreux dispositifs ont déjà été proposés pour assurer leur atténuation. Cette atténuation doit s'effectuer sans perturber trop fortement le flux d'air, et donc sans obturer la canalisation.

Une solution a été proposée dans le document US-4 667 770, qui consiste à mettre en place à l'intérieur de la canalisation un organe présentant une forme hélicoïde. Cet organe a l'avantage de n'occuper en section qu'une faible partie de la canalisation. De plus, dès lors que l'hélicoïde présente une longueur d'au moins un pas, cet organe empêche la propagation en ligne droite entre deux sections de la canalisation situées en amont et en aval. Les ondes acoustiques étant obligées de se réfléchir sur cet élément hélicoïde, elles subissent forcément une atténuation.

Le dispositif présenté dans ce document présente toutefois différents inconvénients. En effet, le maintien des deux organes hélicoïdes nécessite une double structure. Ainsi, un manchon doit être introduit dans la canalisation pour venir bloquer en force l'ensemble d'éléments hélicoïdes qu'il ceinture. En outre, les deux hélicoïdes sont maintenus par une armature qui empêche la déformation des hélicoïdes à l'intérieur de la canalisation. On conçoit que cette conception mécanique est complexe à mettre en oeuvre, puisqu'elle combine de multiples éléments qu'il est nécessaire d'assembler après les avoir dimensionnés de façon adéquate. En outre et surtout, la multiplication des structures de maintien que sont le manchon et l'armature, diminue la surface utile de la section de la canalisation, et engendre des pertes de charge qui sont néfastes pour les performances de l'installation.

L'un des objectifs de l'invention est donc de fournir un dispositif qui soit d'une part facile à mettre en oeuvre, et qui d'autre part, n'occupe qu'une place très limitée à l'intérieur de la canalisation. Par ailleurs, l'invention cherche à résoudre le problème de la complexité mécanique et donc le coût de ce type de dispositif d'atténuation acoustique.

### EXPOSE DE L'INVENTION

L'invention concerne donc un dispositif d'atténuation acoustique, qui est destiné à équiper une canalisation parcourue par un flux gazeux. De façon connue, ce dispositif inclut un organe de forme sensiblement hélicoïde dont l'axe est sensiblement parallèle à l'axe de la canalisation. Par « hélicoïde », on entend une surface réglée s'appuyant sur un axe central et une hélice périphérique. Ce type de surface peut par exemple être obtenu par une bande dont les petits côtés subissent une rotation l'un par rapport à l'autre autour d'un axe commun.

Conformément à l'invention, ce dispositif comporte tout d'abord une plaque qui est apte à être enroulée de sorte à avoir deux bords jointifs, pour couvrir la surface interne de la canalisation, ou en former une section. Cette plaque comporte au moins deux rainures sensiblement parallèles et inclinées d'un angle non nul par rapport à l'axe de la canalisation qui va les recevoir. Complémentairement, ce dispositif comporte également une bande déformable dont les lisières sont agencées pour coulisser à l'intérieur des rainures formées dans la plaque lorsque celle-ci est enroulée, de manière à former l'organe de forme hélicoïde. La plaque et/ou la bande sont réalisées en matériaux présentant des propriétés d'absorption acoustique.

Autrement dit, l'invention consiste à utiliser une plaque qui est enroulée sur elle-même de manière à former un cylindre, ou plus généralement une forme analogue à la canalisation, et dans laquelle deux rails hélicoïdaux sont réalisés pour la mise en place de la bande centrale.

Ainsi, le dispositif peut être mis en place à l'intérieur d'une canalisation existante, la plaque venant au contact de la surface interne de la canalisation. Ce dispositif peut également former en lui-même une fraction de la canalisation, qui est raccordée de part et d'autre sur une canalisation traditionnelle.

En pratique, pour faciliter la manipulation, la fabrication et le transport des plaques, on privilégiera des formes rectangulaires, sans pour toutefois exclure des formes plus complexes, dans la mesure où elles peuvent s'enrouler de manière à mettre en regard deux grands côtés de la plaque.

En pratique, chaque plaque peut comporter deux rainures adjacentes, qui rejoignent le bord d'entrée de la plaque en deux points distants sensiblement de la moitié de la largeur de la plaque. Autrement dit, la plaque comporte un bord d'entrée et un bord de sortie, qui correspondent aux côtés de la plaque qui formeront la circonférence de la canalisation, et par laquelle le flux gazeux pénètrera puis sortira du dispositif d'atténuation. Les rainures formant les rails de guidage de la bande hélicoïde débouchent sur le bord d'entrée de telle sorte qu'elles se retrouvent diamétralement opposées lorsque la plaque est enroulée.

En pratique, il est possible de régler le nombre de pas de l'hélicoïde avec la géométrie et/ou le nombre de plaques utilisées.

Ainsi, une plaque unitaire dans laquelle l'hélicoïde parcourt un tour peut être obtenue avec une configuration dans laquelle une rainure qui traverse l'ensemble de la plaque s'étend sensiblement sur la moitié de la largeur de celle-ci. Autrement dit, la rainure débouche sur le bord de sortie avec un décalage d'une demi-largeur de plaque par rapport au bord d'entrée, de telle sorte que la sortie du rail se trouve diamétralement opposée par rapport à l'entrée, et que l'hélicoïde parcourt ainsi un pas.

Il est également possible de donner à la bande centrale une configuration de plusieurs pas d'hélicoïde, par exemple en utilisant un nombre donné de plaques élémentaires qui sont mises bout à bout, avec leurs rails en coïncidence. La longueur de la bande utilisée est alors multipliée par le nombre de plaques employées. Il est également possible de donner une configuration aux plaques et aux rainures telle que la bande centrale effectue plusieurs pas d'hélicoïde. Ainsi, on peut choisir que la rainure qui traverse l'ensemble de la plaque s'étend sur sensiblement la totalité de la largeur de la plaque, typiquement d'un coin de la plaque au coin opposé. Dans ce cas, l'hélice que forme le rail ainsi réalisé se retrouve sur la même génératrice du cylindre de la canalisation, de sorte que l'hélicoïde présente deux pas entre l'entrée et la sortie de la plaque. Bien entendu, ce principe est déclinable en fonction des applications, du nombre de tours souhaité, et en particulier d'un compromis entre pertes de charge générées et taux d'atténuation acoustique souhaité.

Les capacités d'absorption acoustiques du dispositif peuvent être conférées par le ou les matériaux utilisés pour la plaque ou la bande hélicoïde, ou par l'ensemble de ces deux éléments.

Ainsi, dans le cas où l'on utilise un matériau absorbant pour former la plaque, ce matériau étant donc généralement compressible, on pourra réaliser les rainures par compression localisée de la matière formant la plaque. Cette compression confère un état de surface facilitant le glissement de la bande hélicoïde, tout en conservant une bonne capacité d'absorption sur le reste de la surface qui sera exposée au flux d'air. On peut ainsi obtenir la plaque par thermocompression d'un matériau fibreux, présentant des propriétés acoustiques souhaitées. Il est également possible d'adjoindre à la plaque une couche de renforcement, permettant son maintien en forme à l'intérieur de la canalisation, ou encore lui conférant une certaine rigidité lorsque le dispositif d'atténuation est utilisé en tant que section de la canalisation.

Avantageusement, en pratique, le bord d'entrée de la plaque peut présenter un biseau d'épaisseur, de manière à ce que l'épaisseur occupée à l'intérieur de la canalisation augmente progressivement, et ne soit pas la source d'apparition de turbulences aérauliques.

Dans une forme particulière de réalisation, la plaque peut comporter un certain nombre de cannelures orientées parallèlement à l'axe du cylindre, de façon à faciliter l'enroulement de la plaque. Cela est avantageux lorsque le matériau utilisé est difficilement déformable.

En pratique, dans le cas où le dispositif d'atténuation acoustique forme une partie même de la canalisation, il est possible de configurer le dispositif de telle sorte qu'il n'induit pas de diminution de la section utile de la canalisation. Dans ce cas, la plaque peut se prolonger au niveau de ses bords d'entrée et de sortie par des portions sensiblement trapézoïdales. L'enroulement de la plaque permet ainsi de générer en entrée et en sortie des portions tronconiques respectivement convergentes et divergentes. De la sorte, le dispositif d'atténuation se raccorde à la canalisation existante par une portion s'adaptant à l'extérieur du diamètre de la canalisation. La partie centrale du dispositif peut alors être choisie de telle sorte que le diamètre interne de la section de canalisation formée par la plaque enroulée est analogue au diamètre de la canalisation en amont et en aval du dispositif, voire légèrement supérieur pour compenser la section de la bande centrale hélicoïde.

La bande centrale hélicoïde peut avantageusement présenter des lisières réalisées par compression localisée du matériau qui la constitue, et qui préférentiellement, possède des propriétés acoustiques. Ces zones de compression permettent avantageusement de conférer une certaine tenue à la bande, et de faciliter le coulissement des lisières dans les rails de la plaque enroulée.

### BREVE DESCRIPTION DES FIGURES

La manière de réaliser l'invention, ainsi que les avantages qui en découlent, ressortiront bien de la description et des modes de réalisation qui suivent, à l'appui des figures annexées dans lesquelles :
- la figure 1 est une vue en perspective sommaire d'une plaque et d'une bande conformes à l'invention, avant assemblage pour former un dispositif d' atténuation ;
- la figure 2 est une vue en perspective sommaire de la plaque de la figure 1, montrée enroulée ;
- la figure 3 est une vue en perspective sommaire de la plaque de la figure 1 enroulée, dans laquelle la bande de la figure 1 a été introduite ;
- la figure 4 est une vue de dessus de la plaque et de la bande montrant les rapports dimensionnels entre les différents éléments ;
- la figure 5 est une vue analogue à la figure 4 pour une variante de réalisation ;
- la figure 6 est une vue de dessus d'une plaque réalisée conformément à une autre variante de réalisation ;
- la figure 7 est une vue en perspective sommaire d'un dispositif réalisé à partir de la plaque de la figure 6.

### MANIERE DE REALISER L'INVENTION

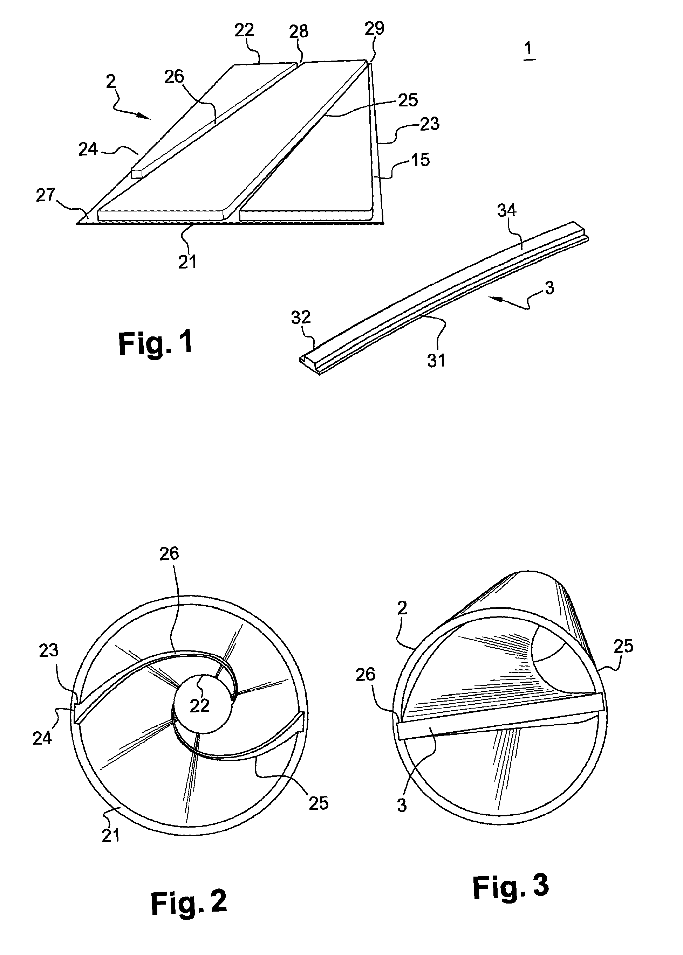

Comme illustré à la figure 1, le dispositif d'atténuation **1** de l'invention se compose essentiellement d'une plaque **2** associée à une bande **3.** La plaque **2** présente un bord d'entrée **21** et un bord de sortie **22** qui correspondent aux petits côtés de la plaque, et qui après enroulement de la plaque, formeront les cercles par lesquels le flux d'air pénètrera et sortira du dispositif d'atténuation. La plaque **2** comporte deux grands côtés **23,24** qui sont destinés à venir au regard l'un de l'autre après enroulement.

Dans la forme illustrée, la plaque **2** comporte deux rainures parallèles **25,26.** La première rainure **26** présente son axe central qui coupe le bord d'entrée **21** au niveau d'un coin **27** de la plaque. L'autre extrémité **28** de cette rainure couple le bord de sortie **22** sensiblement au milieu du bord de sortie. La deuxième rainure **25** couple le bord d'entrée sensiblement au milieu de ce dernier et rejoint le bord de sortie au niveau de l'angle **29** de la plaque.

En pratique, cette plaque peut être réalisée à partir de matériaux poreux fibreux, cellulaires ou granulaires, avec ou sans film surfacique, avec ou sans perforation, de manière à posséder des propriétés d'atténuation acoustique. Les rainures caractéristiques sont réalisées par une opération de thermo-compression qui réduit le coefficient de frottement par rapport au reste de la plaque, et ainsi facilite l'introduction de la bande hélicoïde **3.** La plaque présente également un pourtour **15** qui est thermo-compressé de manière à conférer une certaine rigidité et un effet ressort à la plaque lorsqu'elle sera enroulée, afin de bien venir au contact de la section de canalisation dans laquelle elle sera introduite.

Complémentairement, la bande **3** présente également des grands côtés **31,32** qui sont de moindre épaisseur que le centre **34** de la bande. Dans la forme illustrée, cette bande **3** possède également des propriétés d'absorption des ondes acoustiques sans toutefois que cela soit obligatoire. En effet, dans certaines variantes, la bande centrale peut avoir un comportement acoustique quasi neutre en termes d'absorption, l'essentiel de l'absorption étant assuré par la plaque sur laquelle les ondes acoustiques sont réfléchies alors par la bande centrale. A l'inverse, en variante, la capacité d'absorption acoustique peut être réalisée uniquement par la bande centrale, la plaque enroulée présentant alors des propriétés spécifiques visant à limiter son pouvoir rayonnant vers l'extérieur.

Les grands côtés **31,32** étant comprimés, ils présentent ainsi une rigidité supérieure et une meilleure capacité de glissement à l'intérieur des rails **25,26** formés dans la plaque.

Comme illustré à la figure 2, la plaque **2** peut ensuite être enroulée sur elle-même de telle sorte que ses grands côtés **23,24** viennent au contact l'un de l'autre. A l'intérieur du cylindre ainsi formé, les rainures rectilignes **25,26** se déforment pour former des hélices diamétralement opposées. Ces rainures **25,26** forment donc les rails destinés à accueillir la bande hélicoïde **3,** comme illustré à la figure 3. Au fur et à mesure de sa progression lors de son introduction dans le cylindre, la bande **3** se déforme en se vrillant sur elle-même pour adopter la géométrie hélicoïde.

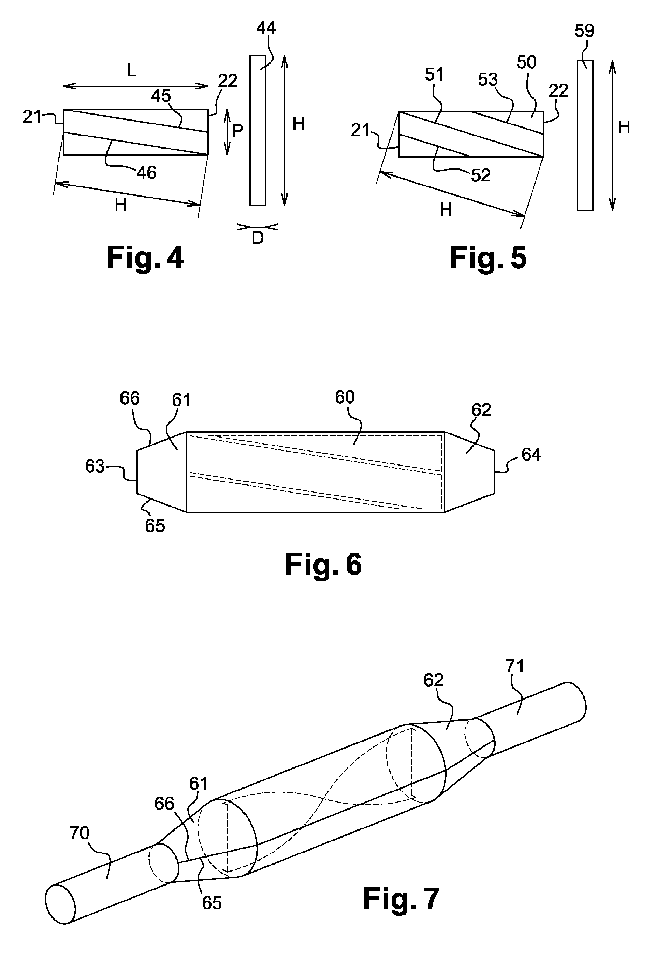

La définition des différents paramètres géométriques de la plaque **2** de la bande **3** permet de jouer sur le taux d'absorption acoustique et les pertes de charge générées. Ainsi, comme illustré à la figure 4, la plaque **40** présente une longueur **L** mesurée sur son grand côté, et une largeur **P** mesurée sur son petit côté correspondant au bord d'entrée **21** et de sortie **22.** Une fois enroulée, cette plaque formera un tube d'un diamètre **D,** qui correspond à la largeur de la bande **44.** La longueur **H** de la bande **44** correspond à la longueur des rainures **45,46.** Dans cette configuration, l'hélicoïde formé par la bande **44** tourne d'un tour sur son parcours à l'intérieur de la plaque.

Il est possible d'utiliser une variante de géométrie illustrée à la figure 5 dans laquelle la plaque **50** comporte trois rainures. La première rainure **51** relie les deux coins **54,55** diamétralement opposés de la plaque. Deux autres rainures **52,53** sont réalisées, parallèlement à la rainure centrale **51.** La rainure **52** démarre sur le bord d'entrée **21** au milieu de la plaque et se termine sur le grand côté, également au milieu de la longueur de la plaque. La troisième rainure **53** débute au milieu du grand côté opposé, de telle sorte qu'elle prolonge la rainure **52** après enroulement de la plaque. Cette troisième rainure **53** débouche sur le bord de sortie **22** au milieu de ce dernier. Par conséquent, lorsque la bande centrale **59** est introduite dans le cylindre formé par la plaque, elle réalise deux tours entre l'entrée et la sortie du dispositif. Cette configuration permet d'augmenter l'atténuation acoustique, mais aussi le niveau de perte de charge. Des configurations intermédiaires ou multiples de celles illustrées aux figures 4 et 5 peuvent être mises en oeuvre en fonction des performances souhaitées.

La figure 6 illustre une variante de réalisation spécifique aux applications dans lesquelles le dispositif d'atténuation acoustique forme une partie de la canalisation.

Ainsi, la plaque **60** se prolonge du côté des bords avant et arrière par deux portions trapézoïdales **61,62,** la largeur du petit côté **63,64** du trapèze étant déterminée pour correspondre sensiblement à la circonférence de la portion **70** de canalisation sur laquelle sera raccordé le dispositif. Ainsi, après repliement, comme illustré à la figure 7, les portions trapézoïdales **61,62** forment une partie tronconique, après que les deux côtés **65,66** non parallèles du trapèze soient rapportés bord à bord. La géométrie similaire adoptée pour le bord de sortie permet de raccorder le dispositif au tronçon aval 71 de la canalisation, avec la même logique. Dans cette configuration, le dispositif d'atténuation sonore ne provoque aucune réduction de section utile, ce qui limite fortement les pertes de charge engendrées. La solidarisation du dispositif aux canalisations existantes peut se faire par tout moyen connu, tel que l'emboîtement simple, le collage ou l'utilisation de collier de serrage.

Bien entendu, les considérations géométriques évoquées pour les autres variantes peuvent s'appliquer à ce mode de réalisation.

Concernant les matériaux utilisés, ceux-ci dépendent des applications, et en particulier des contraintes industrielles et des performances souhaitées. Les matériaux peuvent ainsi être choisis pour leur classement au feu ou leur faible propension à libérer des fibres susceptibles d'encrasser le reste de l'installation par l'ajout de revêtement de surface poreux.

Il ressort de ce qui précède que le dispositif conforme à l'invention présente de multiples avantages, et notamment des performances élevées en termes d'atténuation acoustique, avec des pertes de charge générées particulièrement faibles, comme il a pu être observé lors d'essais sur des bancs de test.

### APPLICATIONS INDUSTRIELLES

L'invention présente de multiples applications dans les domaines mettant en oeuvre des dispositifs aérauliques. On peut en particulier citer les équipements de matériels de production d'énergie, ou des véhicules équipés de moteurs thermiques ventilés. L'invention peut également être avantageusement employée dans tous les systèmes de circulation d'air tel que ventilation ou climatisation, dans des bâtiments ou dans les véhicules.

## Revendications

1. Dispositif d'atténuation acoustique (1) destiné à équiper une canalisation parcourue par un flux gazeux, incluant un organe (3) de forme sensiblement hélicoïde dont l'axe est sensiblement parallèle à l'axe de la canalisation, **caractérisé en ce qu'**il comporte :
- une plaque (2) apte à être enroulée de sorte à avoir deux bords jointifs (23,24) pour couvrir la surface interne ou former une section de ladite canalisation, ladite plaque (2) comportant au moins deux rainures (25,26) sensiblement parallèles, inclinées d'un angle non nul par rapport à l'axe de la canalisation ;
- une bande déformable (3) dont les lisières (31,32) sont agencées pour coulisser à l'intérieur desdites rainures (25,26), et former l'organe de forme hélicoïde ;
ladite plaque (2) et/ou ladite bande (3) étant réalisées en un matériau présentant des propriétés d'absorption acoustique.

2. Dispositif selon la revendication 1, **caractérisé en ce que** la plaque (2) est de forme rectangulaire.

3. Dispositif selon la revendication 1, **caractérisé en ce que** deux rainures (25,26) adjacentes rejoignent le bord d'entrée (21) de la plaque en deux points distants sensiblement de la moitié de la largeur (L) de la plaque (3).

4. Dispositif selon la revendication 1, **caractérisé en ce qu'**une rainure (45,46) qui traverse l'ensemble de la plaque s'étend sensiblement sur la moitié de la largeur (L) de la plaque (3).

5. Dispositif selon la revendication 1, **caractérisé en ce qu'**une rainure (51) qui traverse l'ensemble de la plaque s'étend sensiblement sur la totalité de la largeur de la plaque.

6. Dispositif selon l'une quelconque des revendications précédentes, **caractérisé en ce que** les rainures (25,26) sont réalisées par compression localisée du matériau formant la plaque.

7. Dispositif selon l'une quelconque des revendications précédentes, **caractérisé en ce que** le bord d'entrée (21) de la plaque présente un biseau d'épaisseur.

8. Dispositif selon l'une quelconque des revendications précédentes, **caractérisé en ce que** la plaque présente une couche de renforcement permettant son maintien en forme.

9. Dispositif selon l'une quelconque des revendications précédentes, **caractérisé en ce que** la plaque (60) se prolonge au niveau de ses bords d'entrée et/ou de sortie, par des portions sensiblement trapézoïdales (61,62).

10. Dispositif selon l'une quelconque des revendications précédentes, **caractérisé en ce que** la bande présente des lisières (31,32) réalisées par compression localisée du matériau formant la bande.

11. Dispositif selon l'une des revendications précédentes, **caractérisée en ce que** la plaque présente des cannelures parallèles à l'axe de la canalisation.
